(19)

**Europäisches Patentamt**
**European Patent Office**
**Office européen des brevets**

(11) **EP 4 202 796 B1**

(12) **EUROPEAN PATENT SPECIFICATION**

(45) Date of publication and mention
of the grant of the patent:
**24.09.2025 Bulletin 2025/39**

(51) International Patent Classification (IPC):
**G06N 10/40** (2022.01)  **G06N 10/60** (2022.01)
**G06N 20/20** (2019.01)

(21) Application number: **21383195.1**

(22) Date of filing: **22.12.2021**

(52) Cooperative Patent Classification (CPC):
**G06N 20/20; G06N 10/40; G06N 10/60;**
G06N 10/20

(54) **METHODS, DEVICES AND COMPUTER PROGRAM PRODUCTS FOR SETTING A CLASSIFIER WITH QUANTUM COMPUTATION**

VERFAHREN, VORRICHTUNGEN UND COMPUTERPROGRAMMPRODUKT ZUR EINSTELLUNG EINES KLASSIFIKATORS MIT QUANTENBERECHNUNG

PROCÉDÉS, DISPOSITIFS ET PRODUITS-PROGRAMME INFORMATIQUE POUR CONFIGURER UN CLASSIFICATEUR À L'AIDE DE L'INFORMATIQUE QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2023 Bulletin 2023/26**

(73) Proprietor: **Multiverse Computing S.L.**
**20014 Donostia, Gipuzkoa (ES)**

(72) Inventors:
• **Del Bimbo, Gianni**
  **Donostia-San Sebastián (ES)**
• **Mugel, Samuel**
  **Toronto (CA)**
• **Orús, Román**
  **Donostia-San Sebastian (ES)**

(74) Representative: **Balder IP Law, S.L.**
**Paseo de la Castellana 93**
**5ª planta**
**28046 Madrid (ES)**

(56) References cited:
• ISMAEL C S ARAUJO ET AL: "Quantum ensemble of trained classifiers", ARXIV.ORG, CORNELL UNIVERSITY LIBRARY, 201 OLIN LIBRARY CORNELL UNIVERSITY ITHACA, NY 14853, 18 July 2020 (2020-07-18), XP081723285
• LOIC HENRIET ET AL: "Quantum computing with neutral atoms", ARXIV.ORG, CORNELL UNIVERSITY LIBRARY, 201 OLIN LIBRARY CORNELL UNIVERSITY ITHACA, NY 14853, 22 June 2020 (2020-06-22), XP081700350

## Description

### TECHNICAL FIELD

The present invention relates to the field of quantum devices. More particularly, the present invention relates to methods and apparatuses for classification of data and/or solving classification problems using quantum devices and methods.

### STATE OF THE ART

The operation or behavior of many processes, apparatuses or systems are representable by way of equations with multiple terms and variables so as to account for the different features in the respective process, apparatus or system. Oftentimes it is possible to improve the efficiency of the processes, apparatuses or systems by setting a superior configuration or modifying an existing configuration by a superior one that influences the concerned operation or dynamics.

Even when the processes, apparatuses or system under supervision are not very complex, the equations associated therewith representing their operation or behavior might include tens or hundreds of variables that are interrelated in some way, hence optimization of the equations requires large processing power.

Delay in the solving of such problems severely impacts the control of processes, apparatuses and systems of different industries, and more particularly the product resulting from the processes, apparatuses and system. It has been seen that quantum computing can shorten the time it takes to solve computational problems, for example EP-3664099-A1 describes the use of a quantum computing resource to solve an exchange problem.

In occasions the problems to be solved require the classification of data in several classes, and it is deemed necessary to have methods and devices whereby this type of problems can be solved effectively and/or in a period of time shorter than with prior art methods and devices. Processes, devices and/or systems relying on an effective quantum classification might make possible to supervise and/or control different processes, apparatuses and systems in a fast and reliable manner.

Isamel C S Araujo et al "Quantum ensemble of trained classifiers", arxiv.org, Cornell University Library, 201 Olin Library Cornell University Ithaca, NY 14853, 18 July 2020, discloses a quantum ensemble of trained classifiers. Loic Henriet et al "Quantum computing with neutral atoms", arxiv.org, Cornell University Library, 201 Olin Library Cornell University Ithaca, NY 14853, 22 June 2020, discloses quantum computing with neutral atoms.

### DESCRIPTION OF THE INVENTION

A first aspect of the present invention relates to a method according to claim 1.

Trapping means, such as a magneto-optical trap, is set in the vacuum chamber (for example an ultra-high vacuum chamber) by way of at least a first laser (it could be one laser or a plurality of lasers) trapping neutral atoms of the ensemble of atoms in optical tweezers. The trapped atoms form the quantum register. For example, a dilute atomic vapor is formed inside the vacuum chamber at room temperature and, with the first laser, a cold ensemble of atoms is prepared inside the magneto-optical trap. The optical tweezers are arranged as a lattice that does not necessarily have any particular shape. The quantum register initially has all the atoms in a neutral or reference state, e.g. $|0\rangle$ or $|+\rangle$, when the ensemble of atoms is to be radiated with at least a second laser. Each tweezer contains at most one single atom. Individual atoms are isolated within the ensemble with the second laser. The beam radiated by the second laser is preferably focused on spots of about 1 micrometer of diameter. Likewise, the atoms are also in neutral or reference state whenever the ensemble is to be radiated with at least the second laser in accordance with at least one configured/reconfigured laser parameter. The at least one second laser radiates the entire ensemble of atoms in accordance with the at least one laser parameter and, depending on the behavior of the atoms that is precisely at least dependent upon the at least one laser parameter, certain atoms of the ensemble of atoms will get excited and some others not as explained later in the invention. The size of the quantum register (i.e. the number of atoms) is usually only limited by the amount of trapping laser power and by the performance of the first laser generating the optical tweezers. The atoms in the quantum register are in neutral state such that they all are, for example, in state $|0\rangle$, so that the register is initialized in the state $|0\rangle^{\otimes n}$.

For each atom, a quantum bit is defined by using two electronic levels, which are referred to as $|0\rangle$ and $|1\rangle$. For example, each quantum bit takes quantum state $|1\rangle$ as a Rydberg state (an excited state with very large quantum number), and $|0\rangle$ as the atomic ground state. The transition between the two states in the atomic cloud is driven via laser light. Readout of the quantum register is for example done by taking a fluorescence image, where atoms in state $|0\rangle$ appear for example as bright, and atoms is state $|1)$ appear for example as dark.

In embodiments, the neutral atoms are rubidium atoms or ytterbium atoms. The atoms remain trapped in the optical tweezers while the at least first laser radiates the atoms accordingly as known in the art and, preferably, they remain trapped at least until the quantum register is read. Notwithstanding, in some embodiments, the at least first laser stops radiating the atoms after the ensemble of atoms has been radiated with the at least second laser (using the laser parameters resulting from the corresponding laser controlling function); in these embodiments, even if the atoms do not remain trapped in the optical tweezers, they remain substantially static, which makes reading the quantum register possible as well.

The one or more processing devices, which comprise one or more classical processing devices and one or more quantum processing devices, carry out the method for generating, out of a plurality of weak classifiers, a boosted classifier. The boosted classifier has the capacity of classifying datapoints of datasets into the two or more classes with less error, on average, than the weak classifiers, thereby having a superior classification capacity.

The boosted classifier comprises plurality of classifiers weighted so as to provide a superior classification than that provided by the plurality of classifiers themselves. The one or more weighing factors associated to each classifier of the plurality of classifiers are optimized by combining the use of the one or more classical processing devices and the one or more quantum processing devices in a particular manner enabling quicker training of the boosted classifier compared to other devices which do not use any quantum processing device. This combination, as explained below, enables implementing a QAOA routine such as the QAOA routine described in "A Quantum Approximate Optimization Algorithm; Edward Farhi, Jeffrey Goldstone, Sam Gutmann; arXiv:1411.4028 (2014)", to minimise a cost function, in particular an NP-hard cost function, of a boosting method such as the boosting method described in "Training a Binary Classifier with the Quantum Adiabatic Algorithm; Hartmut Neven, Vasil S. Denchev, Geordie Rose, William G. Macready; arXiv:0811.0416". In particular, the weighting factors are mapped to a state of qubits in a quantum register of the one or more processing devices, so that by means of laser irradiation, the state of the qubits in the quantum register is quickly updated, i.e. optimized, in a controlled and relatively quick manner, thereby optimizing the values of the weighting factors. Therefore, this hybrid training enables obtaining boosted classifiers having better classification performance compared to the classical counterparts and at the same time enables keeping the overall computational cost low.

When data is to be classified in the context of the present invention, each datapoint, e.g. a vector $\vec{x}_j$, is to be classified in one class among a plurality of classes. This means that if the classification of vector $\vec{x}_j$ is denoted $y_j$, then $y_j$ is e.g. +1 and -1, or 1 and 0, when there are only two classes, or is e.g. +1, 0, and -1, or 3, 2, 1 and 0, when there are three classes, or four classes, respectively. Different class labels can be used, and different numbers of classes are possible within the scope of the present invention.

In the context of the present invention, the term "boosted" is used to denote that the classifier relies on the weak classifiers with optimized weighting factors and, thus, distinguish said "boosted classifier" from the weak classifiers, namely the plurality of classifiers. Different boosted classifiers are known in the art, for example AdaBoost and QBoost. It will be noted that the "boosted classifier" may as well be named "aggregate classifier" or simply "classifier". Further, the term "optimize" and its derivations -such as "optimization", etc.- should not be understood as performing the maximal improvement possible, but an improvement over a nonoptimized or less optimized coefficient, problem, solution to the problem, etc.

In embodiments, the method further comprises solving, by the one or more processing devices setting the boosted classifier, a problem requiring classification of datapoints in a dataset in the two or more classes using the boosted classifier, the problem defining either a configuration or operation of an apparatus or system, or behaviour of a process.

In embodiments, the method further comprises determining based on the solution to the problem, by one or more processing devices, at least one of the following: whether a potential anomaly exists in the operation of the apparatus or the system, or in the behaviour of the process; and a configuration of the apparatus or the system intended to improve the operation and/or solve the potential anomaly thereof, or a configuration of any apparatus or system in the process intended to improve the behaviour and/or solve the potential anomaly of the process.

The quicker training of the boosted classifier enables a quickly obtaining an enhanced, e.g. more accurate, boosted classifier providing more reliable detection of sub-optimal configurations, operation, or behavior of apparatuses, systems and processes, and likewise enables a more reliable detection of potential anomalies in the operation or behavior of the same. This, in turn, makes possible to react more frequently and more rapidly in these situations, and do so with a more precise solution, be it by commanding or actuating an apparatus and/or system to operate differently, by stopping it/them altogether, etc. Or additionally or alternatively it makes possible to provide information to an operator about the scenario in which the apparatuses, systems and/or processes are in so that the operator has a better view of a potential problem or sub-optimal operation before making a decision to address the situation.

In embodiments, the stage of setting a plurality of classifiers for classification of data in two or more classes, comprises training, by one or more processing devices, the plurality of classifiers by inputting a first dataset to the plurality of classifiers and reducing a second cost function associated with the plurality of classifiers, the plurality of classifiers classifying each datapoint of the first dataset in two or more classes.

The plurality of classifiers is trained in such a way that a cost function associated with the classification of the datapoints is reduced as much as possible. The plurality of classifiers may include classical and/or quantum classifiers. For example, the plurality of classifiers may be an amount N of low-depth decision trees. The training of the plurality of classifiers can be performed using known training routines for classifiers using one or more classical processing devices and/or one or more quantum processing devices. The training of the plurality of classifiers may be performed by the one or more processing devices configured for optimizing the weighting factors or may be performed by other one or more processing devices.

The plurality of classifiers may be trained using the same or a subset of the training dataset used in the optimization of the weighting coefficients. The plurality of classifiers may be trained using a training dataset different from the training dataset used in the optimization of the weighting coefficients, e.g. using a training dataset comprising datapoints not comprised by the training dataset used in the optimization of the weighting coefficients. In embodiments, the stage of updating, for reducing the cost function, the at least one laser parameter of the laser by an optimization algorithm until the weighting factors are optimized, comprises: i) digitally reconfiguring the at least one laser parameter for reducing the cost function; ii) radiating the ensemble of atoms with laser so as to excite at least some atoms of the quantum register, with the laser being operated in accordance with the at least one laser parameter as last reconfigured; iii) reading the quantum register with optical means after the last irradiation of the ensemble of atoms, and digitally defining the string of bits based on the quantum register as last read; iv) using the string of bits as last defined, digitally calculating a result of the cost function; v) digitally processing the result of the cost function as last calculated, and digitally providing a convergence factor based on both said result and the result as last stored; and vi) if the convergence factor does not fulfil a predetermined criterion, radiating the ensemble of atoms with laser so as to reinitialize a state of the qubits in the quantum register and repeating steps i) to v); vii) if the convergence factor fulfills the predetermined criterion, digitally setting the boosted classifier with the values of the last modified weighting factors.

The digital reconfiguration of stage i) may be based on a training dataset being the same or a subset of training dataset used for training the plurality of classifiers. The digital reconfiguration of stage i) may be based on a training dataset being different from the training dataset used for training the plurality of classifiers, e.g. may be based on a training dataset comprising datapoints not comprised by the training dataset used in the training of the plurality of classifiers. Any of the configuring and the reconfiguring of the at least one laser parameter enables controlling one or more unitary operations implemented in the quantum circuit upon laser radiation. In particular, the one or more unitary operations implemented by laser radiation are based on the at least one laser parameter. The laser radiation implements the one or more unitary operations, thereby updating the quantum state of the quantum register. In some embodiments, the unitary evolution depends on three laser parameters (a Rabi frequency of the laser radiating the ensemble of atoms, a detuning between the laser radiating the ensemble of atoms and atomic frequencies of the atoms, and a gate time T of the laser radiating the ensemble of atoms).

In embodiments, the stage of radiating with laser causes an evolution of the state of the qubits, the evolution depending on a time-dependent Hamiltonian having the following formula:

$$H(t) = h\Omega(t) \sum_{j=1}^{N} \sigma_j^x - h\Delta(t) \sum_{j=1}^{N} n_j + \sum_{i=1}^{N} \sum_{j=1, j \neq i}^{N} \frac{C_6}{r_{ij}^6} n_i n_j;$$

where: $h$ is Planck's constant divided by $2\pi$, i.e. $h = 1,0545718 \times 10^{-34} m^2 kg/s;$ $\Omega$ is a Rabi frequency of the laser radiating the ensemble of atoms; $\Delta$, which is greater than or equal to zero, is a detuning between the laser radiating the ensemble of atoms and atomic frequencies of the atoms in the vacuum chamber, particularly the difference between the energy of the excited state and the energy of the reference state as known in the art, i.e. not excited; N is an amount of atoms within the ensemble of atoms; $C_6$ is an interaction strength of Van der Waals long-range interactions between atoms; $r_{ij}$ is a physical distance between atoms $i$ and $j$; $\sigma_j^x = |0\rangle\langle 1| + |1\rangle\langle 0|$, i.e. it is the Pauli-x operator; $n_i = |1\rangle\langle 1|$; $n_j = |1\rangle\langle 1|$, i.e. it is the excitation number operator; and $|0\rangle$ and $|1\rangle$ are respective electronic levels for quantum states of an atom and respectively correspond to an atomic ground state and a Rydberg state. The Rydberg state corresponds to an excited state with a large quantum number (for example, but without limitation, 50 or higher, e.g. 60 or even higher, etc.), and the atomic ground state corresponds to a state not excited with a large quantum number (for example, but without limitation below 60, below 50, etc.).

In this way, the laser radiation causes a controlled evolution of the state of the atoms depending on the time-dependent Hamiltonian.

The laser radiating the ensemble of atoms may time-evolve globally the ensemble of atoms when laser controlling function has a unitary operation generated by the Hamiltonian $H(t)$. The unitary operation may evolve a time T for the $n$ atoms in the ensemble:

$$U(T) = \mathcal{T} \exp\left(-\frac{i}{h}\int_0^T H(t)dt\right)$$

**where:** T is a time-ordering operator; $h$ is Planck's constant divided by $2\pi$. The effect of the time T is to control the amount of atom-atom interactions, e.g. by multiplying the coefficient $C_6$, relative to the rest of terms, such as Rabi frequency $\Omega$ and the detuning $\Delta$.

As can be deduced form the equation, the unitary operation is dependent on the time-dependent Hamiltonian *H(t)*. Therefore, the unitary operation implemented by the laser may be adjusted by configuring at least one laser parameter present in the above formula for time-dependent Hamiltonian.

In embodiments, the at least one laser parameter includes a Rabi frequency of the laser radiating the ensemble of atoms, a detuning between the laser radiating the ensemble of atoms and atomic frequencies of the atoms, and a gate time T of the laser radiating the ensemble of atoms. It can be seen that these laser parameters can be controlled for implementing each unitary operation: the Rabi frequency $\Omega$, the detuning $\Delta$, and a gate time *T;* the gate time *T* controls the parameters of the Hamiltonian in accordance with the time of application or execution, namely, the duration. Since the unitary operation *U(T)* is dependent on these laser parameters, and these laser parameters can be reconfigured, these laser parameters can also be considered variational parameters of the unitary operation *U(T).*

In embodiments, in each step of radiating the ensemble of atoms with laser, the Rabi frequency and the detuning are kept constant. It can be seen that when the Rabi frequency $\Omega$ and the detuning $\Delta$ do not change in time, the following n-qubit unitary operator is obtained:

$$U(\Omega, \Delta, T) = \exp(-iHT/h)$$

As can be deduced from the equation, the unitary operator *U(Ω, Δ, T)* is dependent on the constant Rabi frequency $\Omega$ and the detuning $\Delta$ and on the variable gate time T.

The variable durations of the evolutions of the unitary operation (in other words, of the state of the atoms depending on the time-dependent Hamiltonian) can be used as variational parameters of the QAOA routine already mentioned.

The scope of the present invention is not limited to the evolution depending on said Hamiltonian and other equations are possible as well without departing from the scope.

In embodiments, the stage of mapping the binary values of the weighting factors of the classifiers to the state of the qubits in the quantum register is done using a fluorescence image of the atoms.

Following the radiation of the ensemble of atoms with the laser that excites the neutral atoms or not depending upon the laser radiation controlled by the laser controlling function, i.e. the laser parameters, the quantum register is read. The quantum register is readable with optical means, for example an optical device capable of taking a fluorescence image of the quantum register. In this sense, the quantum states of the atom, i.e. the quantum bits, are identifiable through the brightness of the atom: in the optical means, $|0\rangle$ appears bright whereas $|1\rangle$ appears dark.

The quantum bits as read define or are converted into digital bits according to their quantum states. The digital bits are then used for computing the cost function.

The cost function may be computed using a validation dataset. Preferably the validation dataset is different from the training dataset used for reconfiguring the at least one laser parameter. Using a validation dataset different from the training dataset in the calculation of a result of the cost function enables obtaining a more realistic metric of the performance of the boosted classifier compared to using the same training dataset in the calculation of a result of the cost function. For example, an overfitted boosted classifier would be erroneously considered more performant if the training dataset were used in the computation of the cost function.

In embodiments, the defined cost function at least comprises an error function with the error of A relative to B, where: A is $F(\vec{x_j}) \equiv \sum_i \alpha_i f_i(\vec{x_j})$, where $\vec{x_j}$ is a j-th datapoint of a first dataset, $f_i(\vec{x_j})$ is a classification of the j-th datapoint by i-th classifier of the plurality of classifiers, and $\alpha_i$ is one or more weighting factors of the one or more weighting factors associated to the i-th classifier; B is an actual class of the j-th datapoint; and the error function being for all datapoints of the first dataset or a subset of the first dataset.

Thereby, computation of the cost function enables obtaining a deviation between the actual class and the classification given by a boosted classifier.

In embodiments, the computation of the cost function is done digitally. Digital computation of the cost function may enable implementing an even quicker and computationally more efficient optimization routine of the weighting factors.

In embodiments, the defined cost function comprises a square loss part and a regularization part, the regularization part including a L0-norm. This cost function enables obtaining a boosting classifier which is not very complex and which generalizes well on unseen data, i.e. which has a classification performance on generic unseen data similar to the classification performance on the training data.

In embodiments, the defined cost function is:

$$\sum_{s}^{S} \left( \frac{1}{N} \sum_{i}^{N} w_i h_i(x_s) - y_s \right)^2 + \lambda \|w\|_0$$

where:

w is a set of the one or more weighting factors associated to each classifier of the plurality of classifiers; S is a dataset; N is a quantity of classifiers within the plurality of classifiers; $x_s$ is s-th datapoint from the dataset S; $h_i(x_s)$ is a classification of the s-th datapoint $x_s$ provided by i-th classifier $h_i$ from the plurality of classifiers; $w_i$ is one or more weighting factors from the set of weighting factors w and associated to the i-th classifier $h_i$; $y_s$ is a correct classification of the s-th datapoint $x_s$; $\|w\|_0$ is an L0-norm of the set of weighting factors w; $\lambda$ is a real number.

This cost function enables obtaining boosted classifiers which are particularly performant, e.g. particularly accurate, in a quicker manner compared to other cost functions comprising a square loss part and a regularization part including an L0-norm.

Once the result of the cost function is computed using the obtained bits, the result thereof is used to determine, preferably in a digital manner, whether the boosted classifier provides a good classification for the target depending upon the predetermined threshold. If the result is indicative of an insufficiently good classification because the result exceeds the predetermined threshold (or the result does not exceed the predetermined threshold, depending on how the threshold is set, both ways of setting the predetermined threshold being possible within the scope of the present invention), the quantum register is reconfigured in a looped manner by laser radiation. To this end, the result of the cost function may be stored so that it can be used as a baseline in subsequent reconfigurations of the quantum register and, optionally, data about how the laser was configured (e.g. the most recent at least one laser parameter) may also be stored for revision in the future or to be used as predetermined laser parameters. Then, a global laser pulse of the at least one second laser may set the quantum register in state $|+\rangle^{\otimes n}$, and the laser parameters are reconfigured.

Once the laser parameters are reconfigured, the laser radiates the ensemble of atoms in accordance with the laser parameters, thereby implementing unitary operations in the quantum circuit. For example, a global laser pulse of duration $\gamma$ is applied to implement a unitary evolution (or unitary operation) of the atoms under a cost Hamiltonian $H_{cost}$:

$$\exp(-i\gamma H_{cost}/h)$$

In addition, for example, a global pulse of duration $\_\beta$ is applied to implement a unitary evolution (or unitary operation) of the atoms under the mixer Hamiltonian $H_{mixer} = \sum_i^N \sigma_i^x$ (wherein $\sigma_i^x$ is a component of a unitary operator, in particular, $\sigma_i^x$ is the Pauli matrix X):

$$\exp(-i\beta H_{mixer}/h)$$

These two evolutions represent a layer of the quantum circuit implementing, for example, the QAOA routine. Further unitary operation can be implemented in the quantum circuit. The total of layers of the quantum circuit is called depth of the circuit p.

Once the evolutions are completed, the quantum bits of the quantum register are then read to define the new digital values for the weighting factors, and the cost function is evaluated again with the most recent values for the digital bits. This process is repeated until, for example, a convergence factor obtained at least from the most recent result of the cost function (using the digital bits) and the previous result of the cost function (using the digital bits) fulfills the predetermined criterion (e.g. the convergence factor is less than a predetermined value). The convergence factor can be defined in different ways, e.g. the difference between the two results, a cumulative difference between pairs of results, etc. The final weighting factors are the weighting factors of the obtained boosted classifier.

A second aspect of the present invention relates to a system according to claim 12.

A third aspect of the present invention relates to computer program product according to claim 13.

The boosted classifier set in the proposed method provides better performances compared to classical classifiers, while keeping the overall computational cost low, due to, among others, the power of quantum optimization.

In applications in which the fact that the number of classifiers, which is limited to the available number of qubits, following the mapping of one classifier to one qubit, represents a drawback, a conventional iterative freeze&train approach can be adopted. For example: First, an empty final ensemble can be initialized; Second the proposed method can be run with the maximum capacity of classifiers, equal to the number of qubits. Here the cost function will have an extra term to take into account the predictions of the frozen classifiers in the final ensemble; Third, the best classifiers can be added to the final ensemble for storage ("freeze" them); Fourth, based on the performance of the current final ensemble, the sample weights of the train data can be updated; Fifth, the second and following steps can be repeated if necessary. This way, it is possible to go beyond the available number of qubits and allow the method to find the optimal size of the final ensemble for the problem of interest.

The boosted classifier set according to the disclosed method can be applied to solve a variety of technical problems, such as determination of the presence of illnesses in medical images and determination of specific actions to be taken in by autonomous vehicles. For instance, the boosted classifier can take medical images as input and decide if a tumor is present or not, with increased accuracy with respect to standard (non-quantum) classifiers.

Additional advantages of the invention will become apparent from the detailed description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate embodiments of the present invention, which should not be interpreted as restricting the scope of the invention, but just as examples of how the invention can be carried out. The drawings comprise the following figures:

Figures 1 and 2 diagrammatically show processing devices or systems in accordance with embodiments of the present invention.
Figure 3 diagrammatically shows operation of processing devices or systems in accordance with embodiments of the present invention, thereby illustrating methods in accordance with embodiments of the present invention.
Figure 4 diagrammatically shows a method in accordance with embodiments of the present invention.
Figure 5 diagrammatically shows a method in accordance with embodiments of the present invention.

## DESCRIPTION OF WAYS OF CARRYING OUT THE INVENTION

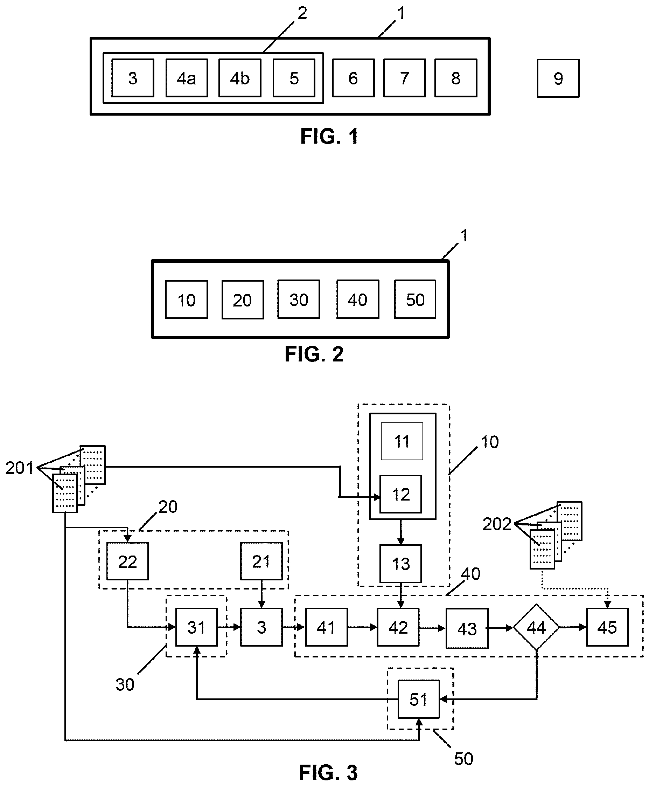

Figure 1 diagrammatically shows a processing device or system 1 in accordance with embodiments of the present invention.

The processing device or system 1 provides a boosted classifier for classification of data. The data may be related to a target 9 to be monitored (indicative of e.g. the status of the target 9, detection of problems in the target 9 or measurements thereof, etc.). The boosted classifier may also be used for solving computational problems related to the target 9. Methods according to the present invention can be carried out by the processing device or system 1.

The processing device or system 1 comprises a quantum circuit 2 (or more generally, a quantum device comprising a quantum circuit) in turn comprising a vacuum chamber 3, at least two lasers 4a, 4b (but further lasers can be arranged), and optical means 5 for reading a quantum register formed in the vacuum chamber 3.

The vacuum chamber 3 is filled with neutral atoms, such as, but without limitation, rubidium atoms or ytterbium atoms. At least one first laser 4a (but further lasers can be used as well when there are more than two lasers) traps atoms in optical tweezers inside the vacuum chamber 3; to this end, the at least one first laser 4a preferably radiates the ensemble of atoms within the vacuum chamber 3 with a spot having a diameter equal to or less than 2 micrometers. At least one second laser 4b of the at least two lasers 4a, 4b radiates the ensemble of atoms to excite at least some of the atoms to provide the boosted classifier in accordance with laser parameters. The array of the optical tweezers provides the quantum register that can be processed with the optical means 5. The quantum circuit 2 and one or more processing devices provide weighting factors for a plurality of classifiers for classification of data in two or more classes, so that a boosted classifier is obtained by combining the weighting factors with the plurality of classifiers.

The processing device or system 1 further comprises at least one processor 6 (also generally referred to as processing device) e.g. at least one classical processor, and at least one memory 7 for storage of instructions, for example in the form of a computer program code, so that a method according to the present invention is carried out upon execution by the at least one processor 6; the at least one memory 7 may also store data related to the boosted classifier itself. Preferably, the at least one processor 6 comprises two or more processors, one for controlling the at least two lasers 4a, 4b, and another one for the computations necessary to provide the boosted classifier.

The processing device or system 1 also comprises a communications module 8 at least so that the quantum circuit 2 can be communicatively coupled with other entities of the processing device or system 1 such as the at least one processor 6 and/or the at least one memory 7, and optionally the communications module 8 enables communication of the processing device or system 1 with a target 9 as well, e.g. apparatuses, systems or controlling devices operating the target 9 or a process. In some embodiments, the processing device or system 1 also comprises the target 9.

Figure 2 diagrammatically shows a processing device or system 1, in terms of functional modules, in accordance with embodiments of the present invention.

A first module 10 is an initialization module intended to set a plurality of classifiers for classification of data in two or more classes, and intended to define a cost function intended to be minimized for optimizing weighting factors.

A second module 20 is an initialization module intended to prepare the quantum circuit 2 of the processing device or system 1 with a quantum register, with the at least one first laser 4a, whenever a boosted classifier is to be provided.

A third module 30 is a quantum circuit configuration module intended to configure the quantum circuit initialized by the second module 20 by means of the at least one second laser 4b exciting atoms of the quantum register. In particular, the quantum circuit 2 and the one or more processing device provides the weighting factors for the classifiers initially set by the first module 10, thereby a boosted classifier is obtained by combining the weighting factors with the classifiers.

A fourth module 40 is a cost computation module intended to assess accuracy of the boosted classifier according to the weighting factors associated to each classifier of the plurality of classifiers provided, among others, by the quantum circuit, and/or a convergence attained among different boosted classifiers. The fourth module 40 is likewise intended to decide whether the boosted classifier has sufficient accuracy and/or is sufficiently convergent and, hence, the boosted classifier is set or, alternatively, a different boosted classifier has to be set.

A fifth module 50 is a laser reconfiguration module intended to update the at least one laser parameter that are to force reconfiguration of the quantum circuit 2 by the third module 30.

These modules 10, 20, 30, 40 and 50 will be described in more detail below with reference to Figure 3. By combining tasks of the modules 10, 20, 30, 40 and 50, a Quantum Approximate Optimization Algorithm (QAOA) routine is executed for minimizing the defined cost function, thereby obtaining optimized weighting factors.

Figure 3 diagrammatically shows operation of processing devices or systems in accordance with embodiments of the present invention, thereby illustrating methods in accordance with embodiments of the present invention.

A processing device or system (such as the processing device or system 1 described with reference to Figure 1 and/or Figure 2) comprises the first, second, third, fourth and fifth modules 10, 20, 30, 40 and 50. Blocks within the modules illustrate, for the sake of clarity only, different tasks run by each module.

The first module 10, which can be part of a classical and/or a quantum processor, sets 11, with at least one processor, a plurality of classifiers for classification of data in two or more classes. Each of the two or more classes has a numeric value associated thereto. Each classifier of the plurality of classifiers has one or more weighting factors associated thereto. The plurality of classifiers may be trained 12 by using a training dataset 201 comprising a plurality of datapoints. How the plurality of classifiers has been trained can subsequently be validated by way of a benchmarking whereby datapoints of a benchmarking dataset are classified in the two or more classes by the trained classifiers; depending on the outcome of the benchmarking, it may be determined that the classifiers should be trained 12 again. The training of the plurality of classifiers may be performed by an entity different from the processing device or system 1, such that the processing device or system 1 is provided with classifiers accurate or convergent enough, i.e. provided with classifiers which do not require training by the processing device or system 1. The first module 10 defines 13, for example by using a classical processor, a cost function including the plurality of classifiers provided by the first module 10 and variable weighting factors for these classifiers. Calculation/Computation of a result of the cost function provides performance information about each specific combination of weighting factors and classifiers forming a boosted classifier, for example calculation of a result of the cost function may count an error between the actual classification of datapoints and the classification of the same datapoints as provided by the boosted classifier. The cost function may be defined by an entity different from the processing device or system 1, such that processing device or system 1 is provided with a cost function already defined.

The second module 20 operates, with at least one processor, at least one first laser 4a of the at least two lasers 4a, 4b for radiating 21, with the at least one first laser 4a, a vacuum chamber 3 comprising atomic vapor so as to provide a quantum register by trapping atoms of an ensemble of neutral atoms in optical tweezers.

The second module 20 also configures 22, with at least one processor, initial laser parameters of the at least one second laser 4b The at least one processor processes the training dataset 201 for configuring the laser parameters, hence changing the unitary operations to be implemented in the quantum circuit 2 by the at least one second laser 4b. In particular, each of the unitary operations comprises at least one variational parameter, the variational parameter having a value dependent on the at least one laser parameter. In some embodiments, the training dataset used for training 12 the classifiers is different from or part of (i.e. include datapoints of) the training dataset processed by the at least one processor for changing the laser parameters.

The third module 30 receives laser parameters as configured 22 by the second module 20 or, alternatively, as reconfigured 51 by the fifth module 50 as will be explained later. The third module 30 operates, with at least one processor, the at least one second laser 4b according to the laser parameters (the initial laser parameters or the reconfigured 51 laser parameters) for radiating 31 the ensemble of atoms in the vacuum chamber 3.

By actuating/radiating upon the atoms according to the laser parameters, the at least one second laser 4b implements unitary operations, and each unitary operation at least depends upon: a) the training dataset 201, b) the set of weighting factors to be changed for reduction of the cost function, and c) the laser parameters to be reconfigured for reduction of the cost function.

The fourth module 40 reads 41, with the optical means 5, the quantum register formed in the vacuum chamber 3, and defines, with at least one processor, a bit for each optical tweezer in the quantum register with a binary value thereof based on an amount of light produced by the respective atom.

The fourth module 40 also calculates 42, with at least one processor, a result of the cost function using the bits defined following the reading 41 of the quantum register. These bits define the weighting factors of the classifiers forming a boosted classifier. The dataset used for calculating 42 a result of the cost function can be the training dataset 201, part thereof (i.e. include datapoints thereof), and/or a different one.

The fourth module 40 stores 43, in at least one memory with at least one processor, the calculated 42 result of the cost function and, optionally, the laser parameters as provided by the second module 20 during the reduction of the cost function or, in other words, those yielding the laser parameters used in the last irradiation 31 of the ensemble of atoms by the third module 30. The fourth module 40 further processes, with at least one processor, the calculated 42 result of the cost function and determines 44 whether the boosted classifier can be set or not, i.e. whether the boosted classifier fulfills a predetermined criterion. For example, when the result of the cost function is below a predetermined threshold, the boosted classifier is set 45 with the classifiers provided by the first module 10 and the latest weighting factors provided by, among others, the quantum circuit 2; otherwise, the fourth module 40 attempts to attain the setting of a better quantum register. For example, the determination 44 with at least one processor processes the calculated 42 result of the cost function and of previous computed 42 results of cost functions, if there are any, to derive a convergence factor. When the convergence factor fulfills a predetermined criterion, the boosted classifier is set 45, and if not then the fourth module 40 further attempts to attain the setting of a better quantum register.

When the boosted classifier is set 45, the boosted classifier can be tested or benchmarked, with at least one processor, by receiving and processing a benchmarking dataset 202.

The fifth module 50 reconfigures 51, with at least one processor, the at least one laser parameter by processing a training dataset, such as Rabi frequency of the laser 4b radiating 31 the ensemble of atoms, a detuning between the laser 4b radiating 31 the ensemble of atoms and/or atomic frequencies of the atoms, and a gate time of the laser 4b radiating 31 the ensemble of atoms; preferably, merely the gate time of the laser radiating 31 the ensemble of atoms is reconfigured. Reconfiguration of the gate time T may involve changing duration of a laser pulse by the at least one second laser 4b. The reconfiguration is conducted with an optimization technique by means of performing a classical optimization routine such as gradient descent.

The previously reconfigured laser parameters are provided to the third module 30, which again operates the at least one second laser 4b according to the previously reconfigured laser parameters to radiate 31 the ensemble of atoms so as to provide a different boosted classifier by way of differently excited atoms in the quantum register in the vacuum chamber 3. Then, the fourth module 40 reads 41 the quantum register, computes 42 the new result of the cost function, stores 43 the new result of the cost function, and determines 44 whether a boosted classifier can be set 45 or, alternatively, the fifth module 50 has to further reconfigure **51 the laser** controlling function to provide a better boosted classifier, that is to say, one that attains a convergence factor and/or an accuracy with respect to previous boosted classifiers that fulfills the predetermined criterion.

After setting 45 the boosted classifier, in some embodiments the boosted classifier is provided to another module so that classification problems may be solved.

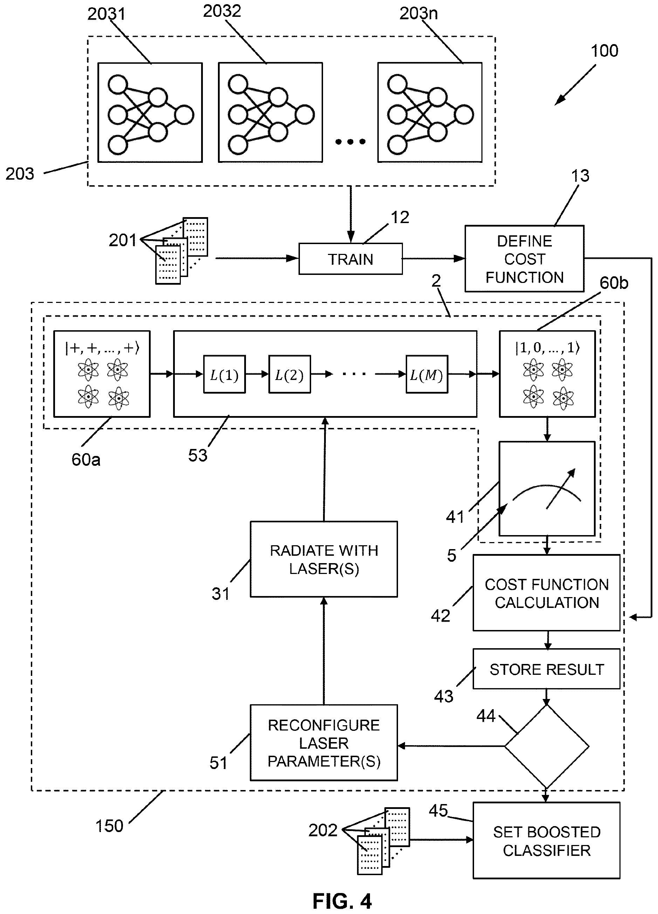

Figure 4 diagrammatically shows a method 100 in accordance with embodiments of the present invention.

Figure 4 schematically shows a stage in which a QAOA routine 150 is performed.

For the sake of clarity, the quantum register of the quantum circuit 2 is represented twice in figure 4, namely, a first representation of the quantum register 60a represents a first quantum state of the register and a second representation of the quantum register 60b represents a second quantum state of the register.

In the method 100, a plurality of unitary operations L is set 53. The at least one second laser 4b radiates 31 according to the at least one laser parameter of the ensemble of atoms such that the different unitary operations L are sequentially applied. The ensemble of atoms has been previously trapped in optical tweezers by the at least one first laser 4a as part of method 100, thereby providing the quantum register. The quantum register comprises n atoms. The atoms in the quantum register are in neutral state such that they all are in state $|0\rangle$, so that the register is initialized in the state $|0\rangle^{\otimes n}$. A global laser pulse changes the state of the register to $|+\rangle^{\otimes n}$ (register 60a). The irradiation 31 excites at least some atoms according to a Rydberg state owing to the laser parameters obtained, and the quantum register reflects the excitation of the atoms (register 60b). Excited atoms, i.e. $|1\rangle$, and non-excited atoms, i.e. $|0\rangle$, are identified upon reading 41 the quantum register 60b with the optical means 5.

A set of classifiers 203 comprises n classifiers 2031, 2032, ... 203n. Each classifier 2031, 2032, ... 203n of the set of classifiers 203 is trained 12 by using the training data 201. The classifiers of the set of classifiers 203 can be of classical or quantum nature. Examples of classical classifiers are Support Vector Machines, Neural Networks, Logistic Regression, Decision Trees and Random Forest. Examples of quantum classifiers are quantum Support Vector Machines, quantum Neural Networks and quantum variational circuits with data reuploading. As explained below, the boosted classifier is set, the boosted classifier comprising the classifiers provided by the first module 10 and optimized weighting factors for the already trained set of classifiers 203. The trained classifiers are provided for defining 13 the cost function.

The cost function is defined 13 by processing the provided, and already trained, classifiers 2031, 2032, ... 203n and variable weighting factors associated to the provided classifiers 2031, 2032, ... 203n.

The readout 41 of the quantum register 60b (excited and non-excited atoms) is followed by a digitization of the identified atoms, not shown, thereby obtaining a binary value for each atom. For example, each binary value defines a weighting factor of a classifier provided by the first module 10.

The result of the defined cost function is calculated 42. The result of the defined cost function depends on the weighting factors obtained in the readout 41. The last result of the defined cost function is stored 43 in at least one memory (in some embodiments, the at least one laser parameter is stored alongside the result). Depending on the result calculated 42, it is determined 44 whether the boosted classifier can be set 45, or whether the boosted classifier must be further improved before being set 45. In the latter case, the at least one laser parameter is reconfigured 51 with an optimization technique, e.g. gradient descent, simplex methods or genetic algorithms and the training dataset 201 aiming to reduce the cost function.

The laser radiates 31 the ensemble of atoms, according to the last reconfigured at least one laser parameter, whilst the quantum register 60a has the atoms in the state |+), and the same procedure is repeated until some convergence or accuracy is attained for determining 44 that the boosted classifier can be set 45 and its at least one laser parameter stored for later use of the boosted classifier. In this way, a QAOA routine 150 is defined comprising reconfiguring 51 the at least one laser parameter radiating 31 the ensemble of atoms whilst the quantum register 60a has the atoms in the state | +), performing the readout 41 of the quantum register 60b, calculating 42 a result of the cost function and determining 44 whether the boosted classifier can be set. The atoms reset to state $|+\rangle$ in each iteration of the QAOA.

The optimization comprises repeating the QAOA optimization routine 150 until first one or more predetermined criteria are met, thereby producing a loop. To this end, the one or more processing devices running the QAOA optimization routine 150 compares a result of the cost function and/or a number of times that the weighting factors reconfigurations have been conducted with predetermined threshold(s) or range(s) so as to determine whether the modification of the weighting factors has resulted in a sufficient optimization. Regarding the former, a convergence can be established, for example, by computing a difference between the current result (or a parameter thereof) of the cost function and the result (or a parameter thereof) of the cost function before the most recent reconfiguration of the weighting factors and comparing said difference with a predetermined threshold, or by computing a difference between the result (or the parameter thereof) of the cost function and the result (or the parameter thereof) of the cost function before having effected the N (with N equal to e.g. 50, 100, 500, etc.; with N equal to 1 if the former example is provided) most recent reconfiguration(s) of weighting factors and comparing said difference with a predetermined threshold; when the difference does not exceed the predetermined threshold it is deemed that the value (or the parameter thereof) has converged sufficiently.

When the first one or more predetermined criteria are met, the repetition of the QAOA optimization routine 150 is halted, hence halting the optimization of the weighting factors, and the boosted classifier is set 45 with the last weighting factors provided by, among others, the quantum circuit 2.

The set 45 boosted classifier can be tested with the benchmarking dataset 202 and, based on the result, the method 100 may be started all over again if the result of the boosted classifier is determined not to be good because it exceeds a predetermined threshold, or because it does not exceed the predetermined threshold, depending on how the threshold is set.

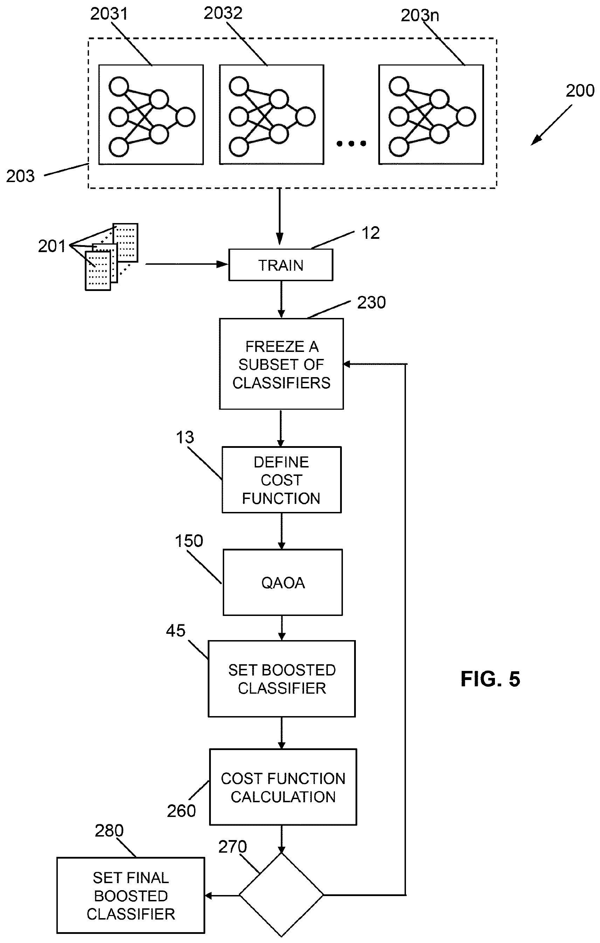

Figure 5 diagrammatically shows a method 200 in accordance with embodiments of the present invention. The method 200 can be used for setting a boosted classifier with a quantum circuit 2 having less qubits than the number of classifiers comprised by the boosted classifier.

The training 12 of the classifiers 203 is performed similarly to method 100. A subset of the classifiers is frozen 230, which means that the weighting factors associated to the frozen classifiers are kept constant to their initialization values or to the values in the last set 45 boosted classifier, i.e. the weighting factors are not optimized, in the following execution of the QAOA routine 150. The cost function is defined 13 accordingly to the classifiers chosen to be frozen. The cost function can be divided in a first part comprising classifiers associated to weighting factors subjected to change, i.e. subjected to optimization, as the QAOA routine 150 evolves, and a second part comprising classifiers associated to constant weighting factors, i.e. weighting factors which are not optimized as the QAOA routine 150 evolves.

Upon reaching convergence conditions of the QAOA routine 150, a boosted classifier is set 45. The boosted classifier comprises the frozen subset of classifiers and the classifiers associated to the weighting factors optimized in the last execution of the QAOA routine 150.

A result of a cost function is calculated 260. In some embodiments the cost function is the same as the cost function of the QAOA routine 150. In other embodiments the cost function of step 260 is different from the cost function of the QAOA routine 150.

Depending on the calculated result 260, it is determined 270 whether a final boosted classifier can be set 280, or whether the boosted classifier must be further improved before being set 280. In the latter case, a different subset of classifiers is frozen, so that one or more of the classifiers frozen in the last iteration of method 200 are not kept frozen, and one or more of the classifiers unfrozen in the latest iteration are frozen so that their corresponding weighting factors in the last set 44 boosted classifier are kept constant in the following execution of the QAOA routine 150

The same procedure is repeated until some convergence or accuracy is attained for determining 270 that the final boosted classifier can be set 280.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art -for example, as regards the choice of materials, dimensions, components, configuration, etc.-, within the scope of the invention as defined in the claims.

**Claims**

1. A method comprising:

   setting (11), by one or more processing devices (6), a plurality of classifiers for classification of data in two or more classes, each of the two or more classes being associated to a numeric value, and each classifier of the plurality of classifiers being associated to one or more weighting factors;
   defining (13), by one or more processing devices (6), a cost function;
   optimizing, by one or more processing devices (6) and a quantum device, the one or more weighting factors associated to each classifier of the plurality of classifiers; wherein the quantum device comprises a quantum circuit (2), wherein the quantum circuit (2) comprises a vacuum chamber (3), at least two lasers (4a, 4b) and optical means (5), and wherein the vacuum chamber (3) comprises an ensemble of neutral atoms; wherein the optimizing the one or more weighting factors associated to each classifier of the plurality of classifiers is performed by minimizing the defined cost function as follows:

   radiating (21) the vacuum chamber (3) with a laser (4a) of the at least two lasers (4a, 4b) so as to trap atoms of the ensemble of neutral atoms in an array of optical tweezers, thereby providing a quantum register (60a), wherein each optical tweezer comprises a single neutral atom;
   digitally configuring (22), by one or more processing devices (6), at least one laser parameter for implementing one or more unitary operations (L), wherein the one or more unitary operations (L) are dependent at least upon the at least one laser parameter;
   radiating (31) the ensemble of neutral atoms with laser light so as to excite at least some atoms of the quantum register (60a), with a laser (4b), of the at least two lasers (4a, 4b), being operated in accordance with the at least one laser parameter to implement one or more unitary operations (L) in the quantum circuit (2);
   reading (41) the quantum register (60b) with the optical means, thereby obtaining a string of bits based on an amount of light produced by the atoms, thus mapping binary values of the weighting factors of the classifiers to a state of qubits in the quantum register (60b);
   using the string of bits to compute the cost function;
   updating, for reducing the cost function, the at least one laser parameter of the laser (4b) by an optimization algorithm until the weighting factors are optimized;

   digitally storing (43), by one or more processing devices (6), at least a result of the cost function as last computed; and
   setting (45), by one or more processing devices (6), a boosted classifier based on the optimized weighting factors.

2. The method of claim 1, further comprising solving, by the one or more processing devices (6) setting the boosted classifier, a problem requiring classification of datapoints in a dataset in the two or more classes using the boosted classifier, the problem defining either a configuration or operation of an apparatus or system, or behaviour of a process.

3. The method of claim 2, further comprising determining based on the solution to the problem, by one or more processing devices (6), at least one of the following:

   whether a potential anomaly exists in the operation of the apparatus or the system, or in the behaviour of the process; and

a configuration of the apparatus or the system intended to improve the operation and/or solve the potential anomaly thereof, or a configuration of any apparatus or system in the process intended to improve the behaviour and/or solve the potential anomaly of the process.

4. The method of any one of the preceding claims, wherein the stage of updating, for reducing the cost function, the at least one laser parameter of the laser (4b) by an optimization algorithm until the weighting factors are optimized, comprises:

   i) digitally reconfiguring (51), by one or more processing devices (6), the at least one laser parameter for reducing the cost function;
   ii) radiating (31) the ensemble of atoms with laser so as to excite at least some atoms of the quantum register (60a), with the laser being operated in accordance with the at least one laser parameter as last reconfigured (51);
   iii) reading (41) the quantum register (60b) with optical means (5) after the last irradiation (31) of the ensemble of atoms, and digitally defining, by one or more processing devices (6), the string of bits based on the quantum register (60b) as last read (41);
   iv) using the string of bits as last defined, digitally calculating (42), by one or more processing devices (6), a result of the cost function;
   v) digitally processing, by one or more processing devices (6), the result of the cost function as last calculated (42), and digitally providing, by one or more processing devices (6), a convergence factor based on both said result and the result as last stored; and
   vi) if the convergence factor does not fulfil a predetermined criterion, radiating the ensemble of atoms with laser so as to reinitialize a state of the qubits in the quantum register and repeating steps i) to v);
   vii) if the convergence factor fulfills the predetermined criterion, digitally setting (45), by one or more processing devices (6), the boosted classifier with the values of the last modified weighting factors.

5. The method of any one of the preceding claims, wherein the stage of setting a plurality of classifiers for classification of data in two or more classes, comprises training (12), by one or more processing devices (6), the plurality of classifiers by inputting a first dataset (201) to the plurality of classifiers and reducing a second cost function associated with the plurality of classifiers, the plurality of classifiers classifying each datapoint of the first dataset in two or more classes.

6. The method of any one of the preceding claims, wherein the defined cost function (13) at least comprises an error function with the error of A relative to B, where:

   A is $F(\vec{x_j}) \equiv \Sigma_i \alpha_i f_i(\vec{x_j})$, where $\vec{x_j}$ is a j-th datapoint of a first dataset (201), $f_i(\vec{x_j})$ is a classification of the j-th datapoint by i-th classifier of the plurality of classifiers, and $\alpha_i$ is one or more weighting factors of the one or more weighting factors associated to the i-th classifier;
   B is an actual class of the j-th datapoint; and
   the error function being for all datapoints of the first dataset (201) or a subset of the first dataset.

7. The method of any one of the preceding claims, wherein the stage of radiating (31) with laser causes an evolution of the state of the qubits, the evolution depending on a time-dependent Hamiltonian having the following formula:

$$H(t) = h\Omega(t) \sum_{j=1}^{N} \sigma_j^x - h\Delta(t) \sum_{j=1}^{N} n_j + \sum_{i=1}^{N} \sum_{j=1, j\neq i}^{N} \frac{C_6}{r_{ij}^6} n_i n_j;$$

where: $h$ is Planck's constant divided by $2\pi$; $\Omega$ is a Rabi frequency of the laser radiating (31) the ensemble of atoms; $\Delta$, which is greater than or equal to zero, is a detuning between the laser radiating (31) the ensemble of atoms and atomic frequencies of the atoms in the vacuum chamber (3); N is an amount of atoms within the ensemble of atoms; $C_6$ is an interaction strength of Van der Waals long-range interactions between atoms; $r_{ij}$ is a physical distance between atoms $i$ and $j$; $\sigma_j^x = |0\rangle\langle 1| + |1\rangle\langle 0|$; $n_j = |1\rangle\langle 1|$; $n_i = |1\rangle\langle 1|$; and $|0\rangle$ and $|1\rangle$ are respective electronic levels for quantum states of an atom and respectively correspond to an atomic ground state and a Rydberg state.

8. The method of claim 7, wherein the laser (4b) implements the following unitary operation on the ensemble of atoms by evolving a time T:

$$U(T) = \mathcal{T} \exp\left(-\frac{i}{h}\int_0^T H(t)dt\right)$$

where: T is a time-ordering operator; $h$ is Planck's constant divided by $2\pi$.

9. The method of any one of the preceding claims, wherein the at least one laser parameter includes a Rabi frequency of the laser radiating (31) the ensemble of atoms, a detuning between the laser radiating (31) the ensemble of atoms and atomic frequencies of the atoms, and a gate time T of the laser radiating (31) the ensemble of atoms.

10. The method of claim 9, wherein in each step of radiating (31) the ensemble of atoms with laser, the Rabi frequency and the detuning are kept constant.

11. **The** method of any one of the preceding claims, wherein the defined cost function is:

$$\sum_s^S \left(\frac{1}{N}\sum_i^N w_i h_i(x_s) - y_s\right)^2 + \lambda\|w\|_0$$

where:
w is a set of the one or more weighting factors associated to each classifier of the plurality of classifiers; S is a dataset; N is a quantity of classifiers within the plurality of classifiers; $x_s$ is s-th datapoint from the dataset S; $h_i(x_s)$ is a classification of the s-th datapoint $x_s$ provided by i-th classifier $h_i$ from the plurality of classifiers; $w_i$ is one or more weighting factors from the set of weighting factors w and associated to the i-th classifier $h_i$; $y_s$ is a correct classification of the s-th datapoint $x_s$; $\|w\|_0$ is an L0-norm of the set of weighting factors w; $\lambda$ is a real number.

12. A system (1) adapted to perform the method of any one of claims 1-11, wherein the system comprises one or more processing devices (6) and a quantum device, wherein the quantum device comprises a quantum circuit (2), wherein the quantum circuit (2) comprises a vacuum chamber (3), at least two lasers (4a, 4b) and optical means (5), and wherein the vacuum chamber (3) comprises an ensemble of neutral atoms.

13. A computer program product comprising computer program instructions which, when executed by a system (1), cause the system (1) to perform the method of any one of claims 1-11, wherein the system comprises one or more processing devices (6) and a quantum device, wherein the quantum device comprises a quantum circuit (2), wherein the quantum circuit (2) comprises a vacuum chamber (3), at least two lasers (4a, 4b) and optical means (5), and wherein the vacuum chamber (3) comprises an ensemble of neutral atoms.

**Patentansprüche**

1. Ein Verfahren, umfassend:

Einstellen (11), durch eine oder mehrere Verarbeitungsvorrichtungen (6), einer Vielzahl von Klassifizierern zur Klassifizierung von Daten in zwei oder mehrere Klassen, wobei jede der zwei oder mehr Klassen einem numerischen Wert zugeordnet ist, und jeder Klassifizierer der Vielzahl von Klassifizierern einem oder mehreren Wichtungsfaktoren zugeordnet ist;
Definieren (13), durch eine oder mehrere Verarbeitungsvorrichtungen (6), einer Kostenfunktion;
Optimieren, durch eine oder mehrere Verarbeitungsvorrichtungen (6) und eine Quantenvorrichtung, des einen oder der mehreren Wichtungsfaktoren, die jedem Klassifizierer der Vielzahl von Klassifizierern zugeordnet sind; wobei die Quantenvorrichtung eine Quantenschaltung (2) umfasst, wobei die Quantenschaltung (2) eine Vakuumkammer (3), mindestens zwei Laser (4a, 4b) und optische Mittel (5) umfasst, und wobei die Vakuumkammer (3) ein Ensemble von neutralen Atomen umfasst; wobei das Optimieren des einen oder der mehreren Wichtungsfaktoren, die jedem Klassifizierer der Vielzahl von Klassifizierern zugeordnet sind, durch Minimieren der definierten Kostenfunktion wie folgt durchgeführt wird:

Bestrahlen (21) der Vakuumkammer (3) mit einem Laser (4a) der mindestens zwei Laser (4a, 4b), um Atome des Ensembles von neutralen Atomen in einem Array von optischen Pinzetten einzufangen, wodurch ein Quantenregister (60a) bereitgestellt wird, wobei jede optische Pinzette ein einzelnes neutrales Atom umfasst;

digitales Konfigurieren (22), durch eine oder mehrere Verarbeitungsvorrichtungen (6), mindestens eines Laserparameters zum Implementieren einer oder mehrerer unitärer Operationen (L), wobei die eine oder mehreren unitären Operationen (L) mindestens von dem mindestens einen Laserparameter abhängig sind;

Bestrahlen (31) des Ensembles von neutralen Atomen mit Laserlicht, um mindestens einige Atome des Quantenregisters (60a) anzuregen, mit einem Laser (4b) der mindestens zwei Laser (4a, 4b), die in Übereinstimmung mit dem mindestens einen Laserparameter betrieben werden, um eine oder mehrere unitäre Operationen (L) in der Quantenschaltung (2) zu implementieren;

Lesen (41) des Quantenregisters (60b) mit den optischen Mitteln, wodurch ein Bitstring auf der Grundlage einer von den Atomen erzeugten Lichtmenge erhalten wird, wodurch binäre Werte der Wichtungsfaktoren der Klassifizierer auf einen Zustand von Qubits in dem Quantenregister (60b) abgebildet werden;

Verwenden des Bitstrings zum Berechnen der Kostenfunktion;

Aktualisieren, um die Kostenfunktion zu reduzieren, des mindestens einen Laserparameters des Lasers (4b) durch einen Optimierungsalgorithmus, bis die Wichtungsfaktoren optimiert sind;

digitales Speichern (43), durch eine oder mehrere Verarbeitungseinrichtungen (6), mindestens eines Ergebnisses der Kostenfunktion wie zuletzt berechnet; und

Einstellen (45), durch eine oder mehrere Verarbeitungsvorrichtungen (6), eines verstärkten Klassifizierers auf der Grundlage der optimierten Wichtungsfaktoren.

2. Das Verfahren nach Anspruch 1, ferner umfassend das Lösen, durch die eine oder mehrere Verarbeitungsvorrichtungen (6), die den verstärkten Klassifizierer einstellen, eines Problems, das die Klassifizierung von Datenpunkten in einem Datensatz in die zwei oder mehrere Klassen unter Verwendung des verstärkten Klassifizierers erfordert, wobei das Problem entweder eine Konfiguration oder einen Betrieb einer Vorrichtung oder eines Systems oder ein Verhalten eines Prozesses definiert.

3. Das Verfahren nach Anspruch 2, ferner umfassend, auf der Grundlage der Lösung des Problems, das Bestimmen, durch eine oder mehrere Verarbeitungsvorrichtungen (6), von mindestens einem des Folgenden:

ob eine potenzielle Anomalie in dem Betrieb der Vorrichtung oder des Systems oder im Verhalten des Prozesses vorhanden ist; und

einer Konfiguration der Vorrichtung oder des Systems, die dazu bestimmt ist, den Betrieb zu verbessern und/oder die potenzielle Anomalie davon zu beheben, oder einer Konfiguration irgendeiner Vorrichtung oder eines Systems in dem Prozess, die dazu bestimmt ist, das Verhalten zu verbessern und/oder die potenzielle Anomalie des Prozesses zu beheben.

4. Das Verfahren nach einem der vorhergehenden Ansprüche, wobei der Schritt des Aktualisierens, um die Kostenfunktion zu reduzieren, des mindestens einen Laserparameters des Lasers (4b) durch einen Optimierungsalgorithmus, bis die Wichtungsfaktoren optimiert sind, umfasst:

i) digitales Rekonfigurieren (51), durch eine oder mehrere Verarbeitungseinrichtungen (6), des mindestens einen Laserparameters, um die Kostenfunktion zu reduzieren;

ii) Bestrahlen (31) des Ensembles von Atomen mit einem Laser, um mindestens einige Atome des Quantenregisters (60a) anzuregen, wobei der Laser in Übereinstimmung mit dem mindestens einen Laserparameter betrieben wird, wie er zuletzt rekonfiguriert (51) wurde; iii) Lesen (41) des Quantenregisters (60b) mit optischen Mitteln (5) nach der letzten Bestrahlung (31) des Ensembles von Atomen, und digitales Definieren, durch eine oder mehrere Verarbeitungseinrichtungen (6), des Bitstrings auf der Grundlage des Quantenregisters (60b), wie es zuletzt gelesen (41) wurde;

iv) Verwenden des Bitstrings wie zuletzt definiert, digitales Berechnen (42), durch eine oder mehrere Verarbeitungsvorrichtungen (6), eines Ergebnisses der Kostenfunktion;

v) digitales Verarbeiten, durch eine oder mehrere Verarbeitungsvorrichtungen (6), des Ergebnisses der Kostenfunktion wie zuletzt berechneten (42), und digitales Bereitstellen, durch eine oder mehrere Verarbeitungsvorrichtungen (6), eines Konvergenzfaktors auf der Grundlage sowohl des Ergebnisses als auch des Ergebnisses wie zuletzt gespeichert; und

vi) wenn der Konvergenzfaktor ein vorbestimmtes Kriterium nicht erfüllt, Bestrahlen des Ensembles von Atomen mit einem Laser, um einen Zustand der Qubits in dem Quantenregister zu reinitialisieren, und Wiederholen der Schritte i) bis v);

vii) wenn der Konvergenzfaktor das vorbestimmte Kriterium erfüllt, digitales Einstellen (45), durch eine oder mehrere Verarbeitungsvorrichtungen (6), des verstärkten Klassifizierers mit den Werten der Wichtungsfaktoren wie zuletzt modifiziert.

5. Das Verfahren nach einem der vorhergehenden Ansprüche, wobei der Schritt des Einstellens einer Vielzahl von Klassifizierern zur Klassifizierung von Daten in zwei oder mehrere Klassen das Trainieren (12), durch eine oder mehrere Verarbeitungsvorrichtungen (6), der Vielzahl von Klassifizierern umfasst, indem ein erster Datensatz (201) in die Vielzahl von Klassifizierern eingegeben wird und eine zweite Kostenfunktion, die der Vielzahl von Klassifizierern zugeordnet ist, reduziert wird, wobei die Vielzahl von Klassifizierern jeden Datenpunkt des ersten Datensatzes in zwei oder mehrere Klassen klassifiziert.

6. Das Verfahren nach einem der vorhergehenden Ansprüche, wobei die definierte Kostenfunktion (13) mindestens eine Fehlerfunktion mit dem Fehler von A relativ zu B umfasst, wobei:

A gleich $F(\vec{x_j}) \equiv \Sigma_i \ \alpha_i f_i(\vec{x_j})$ ist, wobei $\vec{x_j}$ ein j-ter Datenpunkt eines ersten Datensatzes (201) ist, $f_i(\vec{x_j})$ eine Klassifizierung des j-ten Datenpunktes durch den i-ten Klassifizierer der Vielzahl von Klassifizierern ist, und $\alpha_i$ einer oder mehrere Wichtungsfaktoren des einen oder der mehreren Wichtungsfaktoren ist, die dem i-ten Klassifizierer zugeordnet sind;
B eine tatsächliche Klasse des j-ten Datenpunktes ist; und
die Fehlerfunktion für alle Datenpunkte des ersten Datensatzes (201) oder eine Teilmenge des ersten Datensatzes gilt.

7. Das Verfahren nach einem der vorhergehenden Ansprüche, wobei der Schritt des Bestrahlens (31) mit Laser eine Entwicklung des Zustands der Qubits bewirkt, wobei die Entwicklung von einem zeitabhängigen Hamiltonian mit der folgenden Formel abhängt:

$$H(t) = h\Omega(t) \sum_{j=1}^{N} \sigma_j^x - h\Delta(t) \sum_{j=1}^{N} n_j + \sum_{i=1}^{N} \sum_{j=1, j \neq i}^{N} \frac{C_6}{r_{ij}^6} n_i n_j;$$

wobei: h die Planck-Konstante geteilt durch $2\pi$ ist; $\Omega$ eine Rabi-Frequenz des Lasers ist, der das Ensemble von Atomen bestrahlt (31); $\Delta$, das größer oder gleich Null ist, eine Verstimmung zwischen dem Laser, der das Ensemble von Atomen bestrahlt (31), und den atomaren Frequenzen der Atome in der Vakuumkammer (3) ist; N eine Anzahl von Atomen innerhalb des Ensembles von Atomen ist; $C_6$ eine Wechselwirkungsstärke von Van-der-Waals-Langstrecken-Wechselwirkungen zwischen Atomen ist; $r_{ij}$ ein physikalischer Abstand zwischen Atomen $i$ und $j$ ist;

$\sigma_j^x = |0\rangle\langle 1| + |1\rangle\langle 0|$ ; $n_i = |1\rangle\langle 1|$; $n_j = |1\rangle\langle 1|$; und $|0\rangle$ und $|1\rangle$ jeweilige elektronische Niveaus für Quantenzustände eines Atoms sind und einem atomaren Grundzustand bzw. einem Rydberg-Zustand entsprechen.

8. Das Verfahren nach Anspruch 7, wobei der Laser (4b) die folgende unitäre Operation an dem Ensemble von Atomen durch Entwicklung einer Zeit T ausführt:

$$U(T) = \mathcal{T} \exp\left(-\frac{i}{h} \int_0^T H(t)dt\right)$$

wobei: $\mathcal{T}$ ein Zeitordnungsoperator ist; h die Planck-Konstante geteilt durch $2\pi$ ist.

9. Das Verfahren nach einem der vorhergehenden Ansprüche, wobei der mindestens eine Laserparameter eine Rabi-Frequenz des Lasers, der das Ensemble von Atomen bestrahlt (31), eine Verstimmung zwischen dem Laser, der das Ensemble von Atomen bestrahlt (31), und atomaren Frequenzen der Atome, und eine Gatezeit T des Lasers, der das Ensemble von Atomen bestrahlt (31), umfasst.

10. Das Verfahren nach Anspruch 9, wobei in jedem Schritt des Bestrahlens (31) des Ensemble von Atom mit dem Laser die Rabi-Frequenz und die Verstimmung konstant gehalten werden.

**11.** Das Verfahren nach einem der vorangehenden Ansprüche, wobei die definierte Kostenfunktion ist:

$$\sum_s^S \left( \frac{1}{N} \sum_i^N w_i h_i(x_s) - y_s \right)^2 + \lambda \|w\|_0$$

wobei:

$w$ ein Satz des einen oder der mehreren Wichtungsfaktoren ist, die jedem Klassifizierer von der Vielzahl von Klassifizierern zugeordnet sind; S ein Datensatz ist; N eine Anzahl von Klassifizierern innerhalb der Vielzahl von Klassifizierern ist; $x_s$ der s-te Datenpunkt aus dem Datensatz S ist; $h_i(x_s)$ eine Klassifizierung des s-ten Datenpunktes $x_s$ ist, die durch den i-ten Klassifizierer $h_i$ aus der Vielzahl von Klassifizierern bereitgestellt wird; $w_i$ einer oder mehrere Wichtungsfaktoren aus dem Satz von Wichtungsfaktoren w und dem i-ten Klassifizierer $h_i$ zugeordnet ist; $y_s$ ist eine korrekte Klassifizierung des s-ten Datenpunktes $x_s$ ist; $\|w\|_0$ eine L0-Norm des Satzes von Wichtungsfaktoren w ist; $\lambda$ eine reelle Zahl ist.

**12.** Ein System (1), das zur Durchführung des Verfahrens nach einem der Ansprüche 1 bis 11 geeignet ist, wobei das System eine oder mehrere Verarbeitungsvorrichtungen (6) und eine Quantenvorrichtung umfasst, wobei die Quantenvorrichtung eine Quantenschaltung (2) umfasst, wobei die Quantenschaltung (2) eine Vakuumkammer (3), mindestens zwei Laser (4a, 4b) und optische Mittel (5) umfasst, und wobei die Vakuumkammer (3) ein Ensemble von neutralen Atomen umfasst.

**13.** Ein Computerprogrammprodukt, das Computerprogrammanweisungen umfasst, die, wenn sie von einem System (1) ausgeführt werden, das System (1) veranlassen, das Verfahren nach einem der Ansprüche 1 bis 11 durchzuführen, wobei das System eine oder mehrere Verarbeitungsvorrichtungen (6) und eine Quantenvorrichtung umfasst, wobei die Quantenvorrichtung eine Quantenschaltung (2) umfasst, wobei die Quantenschaltung (2) eine Vakuumkammer (3), mindestens zwei Laser (4a, 4b) und optische Mittel (5) umfasst, und wobei die Vakuumkammer (3) ein Ensemble von neutralen Atomen umfasst.

**Revendications**

**1.** Méthode comprenant :

l'établissement (11), par un ou plusieurs dispositifs de traitement (6), d'une pluralité de classifieurs pour la classification de données en deux classes ou plus, chacune des deux classes ou plus étant associée à une valeur numérique, et chaque classifieur parmi la pluralité de classifieurs étant associé à un ou plusieurs facteurs de pondération ;
la définition (13), par un ou plusieurs dispositifs de traitement, (6), d'une fonction de coût ;
l'optimisation, par un ou plusieurs dispositifs de traitement (6) et un dispositif quantique, du ou des facteurs de pondération associés à chaque classifieur parmi la pluralité de classifieurs ; dans laquelle le dispositif quantique comprend un circuit quantique (2), dans laquelle le circuit quantique (2) comprend une chambre sous vide (3), au moins deux lasers (4a, 4b) et des moyens optiques (5), et dans laquelle la chambre sous vide (3) comprend un ensemble d'atomes neutres ; laquelle optimisation du ou des facteurs de pondération associés à chaque classifieur parmi la pluralité de classifieurs est effectuée par minimisation de la fonction de coût définie comme suit :

irradiation (21) de la chambre sous vide (3) avec un laser (4a) parmi les au moins deux lasers (4a, 4b) de façon que soient piégés des atomes parmi l'ensemble d'atomes neutres dans un réseau de pinces optiques, ce qui donne ainsi un registre quantique (60a), dans laquelle chaque pince optique comprend un seul atome neutre ;
configuration numérique (22), par un ou plusieurs dispositifs de traitement (6), d'au moins un paramètre de laser pour l'exécution d'une ou plusieurs opérations unitaires (L), dans laquelle la ou les opérations unitaires (L) dépendent au moins de l'au moins un paramètre de laser ;
irradiation (31) de l'ensemble d'atomes neutres avec une lumière laser de façon que soient excités au moins certains atomes du registre quantique (60a), avec un laser (4b) parmi les au moins deux lasers (4a, 4b) qui est actionné en fonction de l'au moins un paramètre de laser pour que soient exécutées une ou plusieurs opérations unitaires (L) dans le circuit quantique (2) ;

lecture (41) du registre quantique (60b) avec les moyens optiques, ce qui donne ainsi une chaîne de bits basée sur une quantité de lumière produite par les atomes, et donc une cartographie des valeurs binaires des facteurs de pondération des classifieurs dans un état de qubits dans le registre quantique (60b) ;

utilisation de la chaîne de bits pour calculer la fonction de coût ;

mise à jour, pour réduire la fonction de coût, de l'au moins un paramètre de laser du laser (4b) par un algorithme d'optimisation jusqu'à ce que les facteurs de pondération soient optimisés ;

le stockage numérique (43), par un ou plusieurs dispositifs de traitement (6), d'au moins un résultat de la fonction de coût calculée en dernier ; et

l'établissement (45), par un ou plusieurs dispositifs de traitement (6), d'un classifieur boosté sur la base des facteurs de pondération optimisés.

2. Méthode selon la revendication 1, comprenant en outre la résolution, par le ou les dispositifs de traitement (6) établissant le classifieur boosté, d'un problème requérant une classification de points de données dans un jeu de données dans les deux classes ou plus utilisant le classifieur boosté, le problème définissant soit une configuration soit un fonctionnement d'un appareil ou système, ou un comportement d'un procédé.

3. Méthode selon la revendication 2, comprenant en outre la détermination, sur la base de la solution au problème, par un ou plusieurs dispositifs de traitement (6), d'au moins l'un des suivants :

l'existence éventuelle d'une anomalie potentielle dans le fonctionnement de l'appareil ou du système, ou dans le comportement du procédé ; et

une configuration de l'appareil ou du système ayant pour but d'améliorer le fonctionnement et/ou de résoudre son anomalie potentielle, ou une configuration d'un quelconque appareil ou système dans le procédé ayant pour but d'améliorer le comportement et/ou de résoudre l'anomalie potentielle du procédé.

4. Méthode selon l'une quelconque des revendications précédentes, dans laquelle l'étape de mise à jour, pour réduire la fonction de coût, de l'au moins un paramètre de laser du laser (4b) par un algorithme d'optimisation jusqu'à ce que les facteurs de pondération soient optimisés, comprend :

i) la reconfiguration numérique (51), par un ou plusieurs dispositifs de traitement (6), de l'au moins un paramètre de laser pour réduire la fonction de coût ;

ii) l'irradiation (31) de l'ensemble d'atomes avec un laser de façon que soient excités au moins certains atomes du registre quantique (60a), avec le laser qui est actionné en fonction de l'au moins un paramètre de laser reconfiguré en dernier (51) ; iii) la lecture (41) du registre quantique (60b) avec des moyens optiques (5) après la dernière irradiation (31) de l'ensemble d'atomes, et la définition numérique, par un ou plusieurs dispositifs de traitement (6), de la chaîne de bits basée sur le registre quantique (60b) lu en dernier (41) ;

iv) par utilisation de la chaîne de bits définie en dernier, le calcul numérique (42), par un ou plusieurs dispositifs de traitement (6), d'un résultat de la fonction de coût ;

v) le traitement numérique, par un ou plusieurs dispositifs de traitement (6), du résultat de la fonction de coût calculée en dernier (42), et la fourniture numérique, par un ou plusieurs dispositifs de traitement (6), d'un facteur de convergence basé tant sur ledit résultat que sur le résultat stocké en dernier ; et

vi) si le facteur de convergence ne satisfait pas à un critère prédéterminé, l'irradiation de l'ensemble d'atomes avec un laser de façon que soit réinitialisé un état des qubits dans le registre quantique et la répétition des étapes i) à v) ;

vii) si le facteur de convergence satisfait au critère prédéterminé, l'établissement numérique (45), par un ou plusieurs dispositifs de traitement (6), du classifieur boosté avec les valeurs des derniers facteurs de pondération modifiés.

5. Méthode selon l'une quelconque des revendications précédentes, dans laquelle l'étape d'établissement d'une pluralité de classifieurs pour la classification de données en deux classes ou plus comprend l'entraînement (12), par un ou plusieurs dispositifs de traitement (6), de la pluralité de classifieurs par délivrance en entrée d'un premier jeu de données (201) à la pluralité de classifieurs et réduction d'une deuxième fonction de coût associée à la pluralité de classifieurs, la pluralité de classifieurs classant chaque point de données du premier jeu de données en deux classes ou plus.

6. Méthode selon l'une quelconque des revendications précédentes, dans laquelle la fonction de coût définie (13) au moins comprend une fonction d'erreur avec l'erreur de A par rapport à B, où :

A est $F(\vec{x_j}) \equiv \Sigma_i \, \alpha_i f_i \, (\vec{x_j})$, où $\vec{x_j}$ est le j-ième point de données d'un premier jeu de données (201), $f_i(\vec{x_j})$ est la classification du j-ième point de données par le i-ième classifieur parmi la pluralité de classifieurs, et $\alpha_i$ est un ou plusieurs facteurs de pondération parmi le ou les facteurs de pondérations associés au i-ième classifieur ;

B est une classe véritable du j-ième point de données ; et

la fonction d'erreur étant pour tous les points de données du premier jeu de données (201) ou d'un sous-ensemble du premier jeu de données.

**7.** Méthode selon l'une quelconque des revendications précédentes, dans laquelle l'étape d'irradiation (31) avec un laser provoque une évolution de l'état des qubits, l'évolution dépendant d'une fonction hamiltonienne dépendante du temps répondant à la formule suivante :

$$H(t) = h\Omega(t) \sum_{j=1}^{N} \sigma_j^x - h\Delta(t) \sum_{j=1}^{N} n_j + \sum_{i=1}^{N} \sum_{j=1, j \neq i}^{N} \frac{C_6}{r_{ij}^6} n_i n_j;$$

où : $h$ est la constante de Planck divisée par $2\pi$ ; $\Omega$ est la fréquence de Rabi de l'irradiation laser (31) de l'ensemble d'atomes ; $\Delta$, qui est supérieur ou égal à zéro, est un désaccord entre l'irradiation laser (31) de l'ensemble d'atomes et les fréquences atomiques des atomes dans la chambre sous vide (3) ; N est une quantité d'atomes à l'intérieur de l'ensemble d'atomes ; $C_6$ est une force d'interaction en regard des interactions de longue portée de type Van der Waals entre des atomes ; $r_{ij}$ est une distance physique entre les atomes i et j ; $\sigma_j^x = |0\rangle\langle 1| + |1\rangle\langle 0|$ ; $n_i = |1\rangle\langle 1|$ ; $n_j = |1\rangle\langle 1|$ ; et $|0\rangle$ et $|1\rangle$ sont les niveaux électroniques respectifs pour les états quantiques d'un atome et correspondent respectivement à un état fondamental atomique et à un état de Rydberg.

**8.** Méthode selon la revendication 7, dans laquelle le laser (4b) exécute l'opération unitaire suivante sur l'ensemble d'atomes en développant un temps T :

$$U(T) = \mathcal{T} \exp\left(-\frac{i}{h} \int_0^T H(t) dt\right)$$

où : T est un opérateur d'ordre chronologique ; $h$ est la constante de Planck divisée par $2\pi$.

**9.** Méthode selon l'une quelconque des revendications précédentes, dans laquelle l'au moins un paramètre de laser comprend une fréquence de Rabi du laser irradiant (31) l'ensemble d'atomes, un désaccord entre le laser irradiant (31) l'ensemble d'atomes et les fréquences atomiques des atomes, et un temps de porte T du laser (31) irradiant l'ensemble d'atomes.

**10.** Méthode selon la revendication 9, dans laquelle, dans chaque étape d'irradiation (31) de l'ensemble d'atomes avec le laser, la fréquence de Rabi et le désaccord sont maintenus constants.

**11.** Méthode selon l'une quelconque des revendications précédentes, dans laquelle la fonction de coût définie est :

$$\sum_{s}^{S} \left(\frac{1}{N} \sum_{i}^{N} w_i h_i(x_s) - y_s\right)^2 + \lambda \|w\|_0$$

où :

w est un jeu d'un ou plus des facteurs de pondération associés à chaque classifieur parmi la pluralité de classifieurs ; S est un jeu de données ; N est une quantité de classifieurs à l'intérieur de la pluralité de classifieurs ; $x_s$ est le s-ième point de données issu du jeu de données S ; $h_i(x_s)$ est une classification du s-ième point de données $x_s$ fourni par le i-ième classifieur $h_i$ parmi la pluralité de classifieurs ; $w_i$ est un ou plusieurs facteurs de pondération issus du jeu de facteurs de pondération w et associés au i-ième classifieur $h_i$ ; $y_s$ est une classification correcte du s-ième point de données $x_s$ ; $\|w\|_0$ est une norme L0 du jeu de facteurs de pondération w ; $\lambda$ est un nombre réel.

12. Système (1) adapté pour mettre en œuvre la méthode de l'une quelconque des revendications 1 à 11, lequel système comprend un ou plusieurs dispositifs de traitement (6) et un dispositif quantique, dans lequel le dispositif quantique comprend un circuit quantique (2), dans lequel le circuit quantique (2) comprend une chambre sous vide (3), au moins deux lasers (4a, 4b) et des moyens optiques (5), et dans lequel la chambre sous vide (3) comprend un ensemble d'atomes neutres.

13. Produit programme informatique comprenant des instructions de programme informatique qui, lorsqu'elles sont exécutées par un système (1), conduisent le système (1) à mettre en œuvre la méthode de l'une quelconque des revendications 1 à 11, dans lequel le système comprend un ou plusieurs dispositifs de traitement (6) et un dispositif quantique, dans lequel le dispositif quantique comprend un circuit quantique (2), dans lequel le circuit quantique (2) comprend une chambre sous vide (3), au moins deux lasers (4a, 4b) et des moyens optiques (5), et dans lequel la chambre sous vide (3) comprend un ensemble d'atomes neutres.

**FIG. 1**

**FIG. 2**

**FIG. 3**

**FIG. 4**

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3664099 A1

### Non-patent literature cited in the description

- Quantum ensemble of trained classifiers. **ISAMEL C S ARAUJO et al.** arxiv.org. Cornell University Library, 201 Olin Library Cornell University Ithaca, 18 July 2020, vol. 14853
- Quantum computing with neutral atoms. **LOIC HENRIET et al.** arxiv.org. Cornell University Library, 201 Olin Library Cornell University Ithaca, 22 June 2020, vol. 14853
- **EDWARD FARHI** ; **JEFFREY GOLDSTONE** ; **SAM GUTMANN**. A Quantum Approximate Optimization Algorithm. *arXiv:1411.4028*, 2014
- **HARTMUT NEVEN** ; **VASIL S. DENCHEV** ; **GEORDIE ROSE** ; **WILLIAM G. MACREADY**. Training a Binary Classifier with the Quantum Adiabatic Algorithm. *arXiv:0811.0416*